# EUROPÄISCHE PATENTSCHRIFT

(11) **EP 4 274 691 B1**
(45) Veröffentlichungstag und Bekanntmachung des Hinweises auf die Patenterteilung: **10.09.2025**
(21) Anmeldenummer: 22835590.5
(22) Anmeldetag: 08.12.2022
(51) Int. Cl.: B21D 3/10, B21C 51/00, G01B 21/20, G01B 21/24, G01B 21/30

(54) **VERFAHREN ZUM RICHTEN VON STANGENFÖRMIGEM MATERIAL UND EINE RICHTMASCHINE**
METHOD FOR STRAIGHTENING ROD-SHAPED MATERIAL AND A STRAIGHTENING MACHINE
PROCÉDÉ PERMETTANT DE REDRESSER UN MATÉRIAU EN FORME DE TIGE ET MACHINE DE REDRESSAGE

(30) Priorität: 05.01.2022 DE 102022100183
(43) Veröffentlichungstag der Anmeldung: 15.11.2023
(73) Patentinhaber: Rattunde AG, 19288 Ludwigslust (DE)
(72) Erfinder: RATTUNDE, Ulrich, 19288 Ludwigslust (DE)
(74) Vertreter: Groth, Wieland
(86) Internationale Anmeldenummer: PCT/EP2022/084967
(87) Internationale Veröffentlichungsnummer: WO 2023/131465

(56) Entgegenhaltungen:
- EP-A2- 2 055 403
- CN-A- 113 828 656
- DE-A1- 102005 027 640
- DE-A1- 3 211 489
- US-A- 3 481 170

## Beschreibung

Die Erfindung betrifft ein Verfahren zum Richten von nicht geradem, stangenförmigem Material, indem eine plastische Soll-Verformung an einer Umformposition des stangenförmigen Materials ermittelt wird.

Die Erfindung betrifft auch eine Richtmaschine für nicht gerades, stangenförmiges Material zur Durchführung einer plastischen Soll-Verformung an einer Umformposition des stangenförmigen Materials mit einer Steuerung.

In Schneidemaschinen werden stangenförmige Materialien, beispielsweise Rohre, Profile, Vollprofile, verarbeitet. Aus dem langen Vormaterial, das zum Beispiel Längen von 12 Metern aufweisen kann, werden kürzere Abschnitte abgelängt. Diese kürzeren Abschnitte können beispielweise zwei Meter lang sein.

Grundsätzlich sind die Vormaterialien nicht exakt gerade. Daraus ergibt sich, dass die abgelängten Abschnitte ebenfalls nicht exakt gerade sind. Im Folgenden wird "exakt gerade" auch mit "gerade" bezeichnet.

Die Geradheit des Vormaterials hängt vom Werkstoff, der Herstellung, der Güte des Werkstoffs, den Richtvorgängen auf Mehrwalzen-Richtanlagen, dem Transport, der Nachbearbeitung und vielem mehr ab. Für die abgelängten Abschnitte wird oft eine Mindestgeradheit gefordert, zum Beispiel bei Abschnitten für Nockenwellen, Motorwellen oder Kardanwellen. In der Regel ist es technisch nicht möglich oder extrem aufwendig, die Geradheit schon beim Vormaterial zu realisieren.

Um die Abschnitte in der geforderten Geradheit herzustellen, werden Richtmaschinen verwendet. Grundsätzlich werden die Abschnitte bezüglich der Geradheit vermessen, und die Abschnitte, welche sich außerhalb einer vorgegebenen Toleranz bewegen, werden der Richtmaschine zugeführt. Die Richtmaschine richtet dann die Abschnitte und schleust die gerichteten Abschnitte wieder in den normalen Prozessablauf ein, in dem dann wiederum die Geradheit kontrolliert werden kann. Nur die Werkstücke, welche die geforderte Geradheit vor oder nach dem Richtprozess erreichen, werden dann im Materialdurchlauf als Gutteil ausgegeben.

Im Stand der Technik sind beispielsweise aus der DE10 2005 021 946 A1 Richtanlagen mit einem Richtamboss rechts und einem Richtamboss links und einem oder mehreren Richthämmern dazwischen bekannt. Zuerst wird das Werkstück beidseitig eingespannt, zum Beispiel zwischen Spitzen, und rotierend, taktil oder kontaktlos vermessen. Eine geeignete Recheneinheit berechnet die Geradheit des Werkstücks. Es wird ein Abweichungsprofil ermittelt. Die Recheneinheit berechnet auch die notwendigen Verformungen und Auflagestellen, um die Geradheitstoleranz zu erzielen. Dann wird das Werkstück auf die Richtambosse entsprechend den vorher berechneten Sollwerten aufgelegt und mit dem Richthammer so plastisch verformt, bis das Werkstück die geforderte Geradheit erlangt.

Um den Abschnitt plastisch zu verformen, ist es notwendig, mit dem Richthammer den elastischen Bereich der Verformung zu überschreiten. Erst nach der elastischen Verformung findet eine plastische Verformung statt, die auch dauerhaft verbleibt. Der Umformhub des Richthammers muss der elastischen Verformung plus der plastischen Verformung entsprechen. Wenn der Richthammer den Abschnitt wieder entlastet, federt im Wesentlichen der elastische Verformungsanteil zurück, und es verbleibt nur der plastische Verformungsanteil. Wie groß die plastische Verformung an der Umformposition sein soll, ist aus den vorherigen Messungen der Geradheit und der Berechnung der Geradheitsfunktion in der Recheneinheit bekannt.

Das Problem ist aber, dass eine Funktion zwischen elastischem Anteil und plastischem Anteil des Umformhubs nicht konstant ist beziehungsweise keiner exakten bekannten Funktion gehorcht. Die Funktion hängt von sehr vielen Bedingungen ab, wie zum Beispiel Eigenspannungen im Werkstoff, Kaltverfestigungen, Materialschwankungen, die aber selbst innerhalb der Vormateriallänge nicht konstant und damit nicht vorhersehbar sind.

Es ist also mittels Vermessung und mathematischer Berechnung bekannt, wie stark und wo das Werkstück verformt werden muss, um die vorgegebene Toleranz zu erreichen, aber es nicht bekannt, wie groß der zugehörige Sollhub des Richthammers sicher sein muss. Mit statistischen Verfahren ist es möglich, den Sollhub vorherzusagen, aber es gibt dann auch eine erhebliche Wahrscheinlichkeit, dass das Material zu wenig oder zu viel plastisch verformt wird. Der Nachteil wird entweder akzeptiert, oder das Werkstück wird erneut von den Richtambossen abgehoben, vermessen und wieder auf die Richtambosse gelegt und erneut gerichtet. Das ist nachteiligerweise sehr zeitintensiv.

In US 3,481,170 ist ein Richtverfahren beschrieben, bei dem nacheinander Hübe ausgeführt werden, wobei die Längen der Hübe den vorher durch eine Messung festgestellten Exzentrizitäten des Werkstücks entsprechen. Die Hübe werden solange nacheinander durchgeführt, bis die Exzentrizität innerhalb einer vorgegebenen Toleranz liegt. Nachteilig daran ist, dass die relativ viele Hübe durchgeführt werden müssen, damit ein zufriedenstellendes Ergebnis erreicht wird.

In DE 32 11 489 A1 ist ebenfalls ein Verfahren zur Korrektur von Sollform-Abweichungen plastisch verformbarer Gegenstände bekannt. Dabei wird nach dem ersten Richtvorgang also die Form des Gegenstandes erneut gemessen und möglicherweise zurückgebliebene Formfehler werden festgestellt. Daraufhin wird das Verhältnis zwischen Korrekturlänge und Größe der Formabweichung in Abhängigkeit von den gemessenen Restformfehlern verändert, um das Richten der Form des nächsten Gegenstandes zu verbessern. Es wird berücksichtigt, ob ein sogenanntes Über- oder Unterrichten stattgefunden hat, d.h. ob die Formkorrektur zu groß oder zu klein gewesen ist. Dadurch wird ein adaptives Verfahren zur Formkorrektur geschaffen.

Aus der CN 113828656 A ist ein Messtaster bekannt, der an einem Richthammer angeordnet ist.

Es ist daher in einem ersten Aspekt Aufgabe der Erfindung, ein Verfahren zum Richten von nicht geradem, stangenförmigem Material zur Verfügung zu stellen, das die obigen Nachteile zumindest verringert.

Es ist in einem zweiten Aspekt Aufgabe der vorliegenden Erfindung, eine Richtmaschine für nicht gerades, stangenförmiges Material zur Verfügung zu stellen, die die obigen Nachteile verringert.

Die Aufgabe wird in ihrem ersten Aspekt durch ein Verfahren mit den Merkmalen des Anspruchs 1 erfüllt.

Zunächst werden eine oder mehrere plastische Soll-Verformungen an einer Umformposition oder mehreren Umformpositionen des stangenförmigen Materials durch Messverfahren und mathematische Verfahren ermittelt. Unter der Umformposition wird hier die Position verstanden oder der Bereich auf dem Material verstanden, auf die/auf den mit einer Umformkraft eingewirkt wird, um eine Umformung des Materials zu erzielen. Die Messverfahren und mathematische Verfahren dazu sind Stand der Technik und beispielsweise aus Deep Learning mit Python und Keras (ISBN 978-3-95845-838-3) bekannt.

Erfindungsgemäß wird ein Richthammer mit integriertem Messtaster neben bzw. auf die Umformposition verfahren. Unter einem integrierten Messtaster ist hier allgemein zu verstehen, dass Richthammer und integrierter Messtaster miteinander verbunden sind. Der integrierte Messtaster ist physisch im Richthammer angeordnet, und zwar so, dass der Messtaster vorzugsweise im Zentrum einer Druckfläche des Richthammers angeordnet ist. Die Druckfläche des Richthammers trifft während des durch den Umformhub verursachten Umformvorgangs auf die Umformposition des Materials.

Es wird ein erster Umformhub des Richthammers ausgeführt, und eine durch den ersten Umformhub erfolgte plastische Ist-Verformung wird mittels des integrierten Messtasters gemessen. Aus der plastischen Ist-Verformung durch den ersten Umformhub und der Soll-Verformung werden, wenn notwendig, ein zweiter Umformhub bzw. weitere Hübe ermittelt.

Erfindungsgemäß wird zur Ermittlung bereits des ersten Umformhubs ein Kennfeld zur Verfügung gestellt, das für das Material für jeden möglichen Umformhub eine plastische Ist-Verformungspanne angibt, innerhalb derer die Ist-Verformung mit hoher Wahrscheinlichkeit liegt. Vorzugsweise wird die maximale Grenze der plastischen Ist-Verformungsspanne als Umformhub gewählt. Der Umformhub kann aber auch innerhalb der oberen 10 %, 9 % oder jedem geringeren Wert innerhalb der plastischen Ist-Verformungspanne gewählt werden.

Dabei wird der Tatsache Rechnung getragen, dass für eine vorgegebene plastische Soll-Verformung, die an der Umformposition des stangenförmigen Materials durchgeführt werden soll, nicht sicher vorhersagbar ist, welcher Umformhub durchgeführt werden muss. Vielmehr ist durch statistische Verfahren, Erfahrungswerte und der Auswertung durch künstliche Intelligenz und Machine-Learning bekannt, dass ein bestimmter erster Umformhub Verformungen innerhalb einer plastischen Ist-Verformungsspanne, d. h. innerhalb des Kennfeldes erzeugt.

Der Richthammer wirkt mit einem ersten Umformhub auf die Umformposition. Dadurch wird das stangenförmige Material zunächst elastisch und dann plastisch verformt. Nach dem Lösen des Richthammers federt der elastische Anteil zurück, und die plastische Ist-Verformung verbleibt. Diese ist jedoch beim vorgegebenen ersten Umformhub nicht sicher vorhersagbar.

Da die Ist-Verformungsspanne jedoch bekannt ist, also welche Ist-Verformung innerhalb eines bestimmten Bereichs durch einen bestimmten Umformhub mit sehr hoher Wahrscheinlichkeit d. h. zu 99 % - 99,9 % oder höher erzielt wird, wird günstigerweise die Soll-Verformung als hoher Wert, vorzugsweise als Maximalwert der Ist-Verformungsspanne gewählt.

Das heißt, es wird die Soll-Verformung durch die bekannten Verfahren bestimmt, und der Soll-Verformung wird derjenige erste Umformhub zugeordnet, dessen Ist-Verformungsspanne so ausgebildet ist, dass ihr Maximalwert der Soll-Verformung entspricht, das heißt gleicht. Es sind aber grundsätzlich auch andere Zuordnungen denkbar. Beispielsweise kann die Soll-Verformung im oberen Zehntel, Fünftel usw. der durch den ersten Umformhub erzeugten Ist-Verformungen liegen

Günstigerweise wird durch den ersten Umformhub eine elastische Verformung des Materials und eine Ist-Verformung innerhalb der plastischen Ist-Verformungsspanne ausgeführt.

Da der erste Umformhub günstigerweise vorsichtig verfahrensmäßig so gewählt wird, dass die durch den ersten Umformhub erzeugte Ist-Verformung nur im günstigsten Fall bereits der Soll-Verformung entspricht und die Soll-Verformung der Maximalwert der Ist-Verformungsspanne ist, wird in der überwiegenden Anzahl der Fälle die durch den ersten Umformhub erzeugte plastische Ist-Verformung unterhalb der plastischen Soll-Verformung liegen. Es wird also ein zweiter Umformhub erforderlich.

Die durch den ersten Umformhub erzeugte Ist-Verformung wird durch den integrierten Messtaster gemessen und zusammen mit der Soll-Verformung ausgewertet. Es wird günstigerweise eine Kennlinie innerhalb des Kennfeldes durch die Ist-Verformung festgelegt, und die Kennlinie wird zur Bestimmung des zweiten Umformhubs ausgewählt.

Der Verfahrensschritt macht von der Idee Gebrauch, dass die Ist-Verformung bei gegebenem Umformhub in einer bestimmten Konfiguration nicht sicher vorhersagbar ist, sondern lediglich eine Ist-Verformungsspanne angebbar ist, die in dem Kennfeld festgehalten ist. Jedoch kann die Ist-Verformung durch einen zweiten Umformhub deutlich präziser vorhergesagt werden, wenn an der Umformposition, für die bereits eine Ist-Verformung durchgeführt wurde, die Messdaten einer vorhergehenden ersten Verformung ausgewertet werden.

Es hat sich herausgestellt, dass innerhalb des Kennfeldes eine Kennlinie recht genau oder vorzugsweise ganz genau für eine bestimmte Umformposition bestimmt werden kann, wenn für diesen Umformposition die plastische Ist-Verformung für einen bereits durchgeführten ersten Umformhub bekannt ist. Die Kennlinie ist durch den Nullpunkt sowie die Ist-Verformung bei dem durchgeführten ersten Umformhub genau bestimmt, und sie wird erfindungsgemäß zur Bestimmung des zweiten Umformhubs herangezogen.

Günstigerweise gibt die Kennlinie den zweiten Umformhub bei der vorgegebenen plastischen Soll-Verformung genauer vor, vorzugsweise exakt vor.

Erfindungsgemäß wird aus der Ist-Verformung nach dem ersten Umformhub eine Kennlinie des stangenförmigen Materials innerhalb des Kennfeldes ermittelt, die durch den Nullpunkt und die gemessene Ist-Verformung führt. Die Kennlinien haben grundsätzlich einen vergleichbaren Verlauf innerhalb des Kennfeldes. Daher kann die Kennlinie für die Umformposition durch eine einzelne Messung bereits bestimmt werden.

Aus der Kennlinie wird der zweite Umformhub ermittelt. Der zweite Umformhub entspricht dem Schnittpunkt der Kennlinie mit der Soll-Verformung
In einer bevorzugten Ausführungsform des erfindungsgemäßen Verfahrens wird die Soll-Verformung an einer Umformposition des stangenförmigen Materials während des Verfahrens mittels des integrierten Messtasters ermittelt. Das stangenförmige Material wird eingespannt. Eine Null-Position des Richthammers wird bestimmt und gespeichert. Ein erster Messwert des integrierten Messtasters in der Null-Position des Richthammers wird bestimmt und gespeichert. Der erste Umformhub des Richthammers wird ausgeführt. Dann wird der Richthammer in die Null-Position zurückverfahren, und es wird ein zweiter Messwert des integrierten Messtasters in der Null-Position des Richthammers ermittelt, und aus dem ersten und zweiten Messwert des integrierten Messtasters wird eine plastische Ist-Verformung des stangenförmigen Materials durch den ersten Umformhub an der Umformposition ermittelt.

Günstigerweise muss der integrierte Messtaster in seiner ersten und in seiner zweiten Messung lediglich einen Differenzwert feststellen, aus dem sich die durch den ersten Umformhub erfolgte plastische Ist-Verformung ermitteln lässt. Das kann vorzugsweise dadurch geschehen, dass der integrierte Messtaster einen Abstand zwischen einem Messkopf des integrierten Messtasters und der Umformposition an der Außenfläche des stangenförmigen Materials in einer ersten und einer zweiten Messung ermittelt und daraus einen Differenzwert bildet.

Vorzugsweise wird ein Toleranzbereich vorgegeben, der bestimmt, wie weit das stangenförmige Material von dem geraden stangenförmigen Material abweichen darf, und wenn nach Durchführung des ersten Umformhubs eine Differenz zwischen plastischer Ist-Verformung und plastischer Soll-Verformung an der Umformposition außerhalb des Toleranzbereiches liegt, wird ein zweiter Umformhub an der Umformposition durchgeführt. Gegebenenfalls können auch ein dritter und vierter Umformhub durchgeführt werden.

Vorzugsweise wird zunächst eine Ist-Außenfläche des stangenförmigen Materials vermessen und ein Abweichungsprofil der Ist-Außenfläche von einer geradlinigen Sollaußenfläche ermittelt. Aus dem Abweichungsprofil wird die Umformposition ermittelt, auf die der erste Umformhub ausgeübt wird. Üblicherweise werden neben der Umformposition auch ein, zwei oder mehrere Auflagepunkte des stangenförmigen Materials auf Ambossen ermittelt sowie deren Abstand.

Die Umformposition wird aus dem Abweichungsprofil und als Winkelposition um die Längsachse des stangenförmigen Materials und als Position entlang einer Verfahrachse des Richthammers entlang der Längsrichtung der Richtmaschine ermittelt. Die Steuerung der Maschine gestattet es dann, das vorzugsweise zwischen zwei Halterungen eingespannte, stangenförmige Material um die Längsachse in die aus dem Abweichungsprofil bestimmte Winkelposition zu drehen und danach den Hammer neben dem stangenförmigen Material entlang einer in Längsrichtung verlaufenden Verfahrachse so lange zu verfahren, bis der Richthammer direkt auf der Umformposition angeordnet ist und zur Ausübung des ersten Umformhubs auf die Umformposition wirken kann.

Günstigerweise wird in bekannter Weise eine Soll-Verformung aus dem Abweichungsprofil an der Umformposition ermittelt und aus dem Kennfeld, wie oben beschrieben, der erste Umformhub ermittelt, welcher der Soll-Verformung zugeordnet ist.

Günstigerweise wird das stangenförmige Material auf zwei voneinander beabstandete Ambosse aufgelegt und die Umformposition in Längsrichtung zwischen den beiden Ambossen angeordnet.

Die Aufgabe wird in ihrem zweiten Aspekt durch eine Richtmaschine mit den Merkmalen des Anspruchs 9 gelöst.

Die Richtmaschine eignet sich zur Durchführung eines der oben genannten Verfahren. Umgekehrt eignen sich die oben genannten Verfahren zur Durchführung mit einer der nachfolgend beschriebenen Richtmaschinen.

Das hinsichtlich des Verfahrens Gesagte gilt auch als für die Richtmaschine sinngemäß offenbart.

Die erfindungsgemäße Richtmaschine für ein nicht gerades, stangenförmiges Material eignet sich zur Durchführung einer plastischen Soll-Verformung an einer Umformposition des stangenförmigen Materials. Sie umfasst eine Steuerung für eine Verfahreinrichtung mit einem Richthammer mit integriertem Messtaster. Die Steuerung umfasst günstigerweise eine Recheneinheit und einen Speicher. In dem Speicher ist ein Kennfeld abgelegt, welches für das Material für jeden Umformhub eine Ist-Verformungspanne angibt, innerhalb derer die Ist-Verformung mit großer Wahrscheinlichkeit, d. h. von mehr als 95 %, 96 %, vorzugsweise 99 % oder mehr liegt.

Die Steuerung bestimmt günstigerweise mit ihrer Recheneinheit den ersten Umformhub aus der Soll-Verformung, günstigerweise mit Hilfe des Kennfeldes. Die Soll-Verformung ist dabei vorzugsweise innerhalb der oberen 10 % oder weniger, vorzugsweise ein maximaler Wert innerhalb der Ist-Verformungsspanne. Es sind jedoch auch andere Anordnungen zwischen plastischer Ist-Verformungsspanne und plastischer Soll-Verformung denkbar.

Günstigerweise ist der erste Umformhub so gewählt, dass bei dem vorgegebenen Material durch den ersten Umformhub eine plastische Ist-Verformung durchgeführt wird, die unterhalb der bestimmten plastischen Soll-Verformung liegt, zumindest mit großer Wahrscheinlichkeit von 95 % oder mehr, vorzugsweise von 99 % oder mehr Prozent. Eine Überverformung soll vorzugsweise vermieden werden.

Der erfindungsgemäße integrierte Messtaster misst eine durch den ersten Umformhub erfolgte plastische Ist-Verformung und leitet deren Messwerte über eine datenleitende Verbindung der Steuerung zu. Durch die für die bestimmte Umformposition auf Grund des Ist-Umformhubs tatsächlich festgestellte Ist-Verformung kann das Kennfeld auf eine Kennlinie eingeschränkt werden. Aus der Ist-Verformung ist eine Kennlinie innerhalb des Kennfeldes bestimmbar. Durch die Steuerung ist dann, wie oben beschrieben, aus der Soll-Verformung und der Kennlinie ein zweiter Umformhub ermittelbar. Der zweite Umformhub ist der Wert auf der Kennlinie, der die Soll-Verformung erzeugt, also nach dessen Durchführung die Soll-Verformung idealerweise erreicht ist oder, wenn dieses noch nicht der Fall sein sollte, zumindest nur eine plastische Unterverformung erreicht wird und der oben beschriebene Verfahrenszyklus ein weiteres Mal durchlaufen wird.

Vorzugsweise umfasst die Richtmaschine wenigstens zwei voneinander in einer Längsrichtung beabstandete Ambosse zum Abstützen des stangenförmigen Materials. Das stangenförmige Material ist vorzugsweise auf die beiden Ambosse auflegbar und ist dabei günstigerweise durch zwei Halterungen, die einander gegenüberliegen und drehbar angeordnet sind, einspannbar. Zwischen den beiden sich gegenüberliegenden Halterungen sind günstigerweise Messtaster angeordnet, die neben dem eingespannten, stangenförmigen Material angeordnet sind und die es gestatten, die Ist-Außenfläche des stangenförmigen Materials zu vermessen und ein Abweichungsprofil der Ist-Außenfläche von der geraden Soll-Außenfläche zu bestimmen. Daraus sind dann, wie oben beschrieben, durch bereits bekannte Verfahren die Umformposition für den Richthammer und die Auflagestellen des stangenförmigen Materials auf den Ambossen bestimmbar.

Besonders bevorzugt ist zentral durch den Richthammer der integrierte Messtaster mit einem Messkopf geführt, wobei der Messkopf über eine Schlagfläche des Richthammers hinaus eine Abstandsmessung ermöglicht. Günstigerweise ist der Abstand zwischen dem Messkopf und der Umformposition des stangenförmigen Materials bestimmbar. Günstigerweise wird eine erste Abstandsmessung vor Durchführung des ersten Umformhubs und eine zweite Abstandsmessung nach Durchführung des ersten Umformhubs durchgeführt, um durch Differenzbildung die durch den Umformhub erfolgte plastische Ist-Verformung an der Umformposition zu bestimmen.

Der Richthammer ist vorzugsweise an einer quer zur Ist-Außenfläche des stangenförmigen Materials NC-steuerbaren Verfahrachse angeordnet. NC-steuerbare Verfahrachsen sind sehr genau und erlauben die Steuerung des Richthammers im Bereich von Mikrometern.

Das stangenförmige Material ist günstigerweise auf einer Aufnahme positionierbar. Die Aufnahme kann konisch ausgebildet sein. Es ist jedoch auch denkbar, dass die Aufnahme nur als lichter Bereich zwischen zwei sich gegenüberliegend angeordneten Halterungen ausgebildet ist, wobei die Halterungen beispielsweise zwei sich gegenüberliegende Spitzen sein können, zwischen denen die Rohre eingespannt sind und rotiert werden können.

Die Erfindung wird anhand eines Ausführungsbeispiels in sechs Figuren beschrieben. Dabei zeigen:
- Fig. 1: einen schematischen Aufbau einer erfindungsgemäßen Richtmaschine für nicht gerades, stangenförmiges Material,
- Fig. 2: die Richtmaschine für nicht gerades, stangenförmiges Material der Figur 1 in einem ersten Verfahrensschritt,
- Fig. 3: die Richtmaschine für nicht gerades, stangenförmiges Material der Figur 1 in einem zweiten Verfahrensschritt,
- Fig. 4: die Richtmaschine für nicht gerades, stangenförmiges Material nach Figur 1 in einem dritten Verfahrensschritt,
- Fig. 5: die Richtmaschine für nicht gerades, stangenförmiges Material nach Figur 1 in einem vierten Verfahrensschritt,
- Fig. 6: ein Kennfeld.

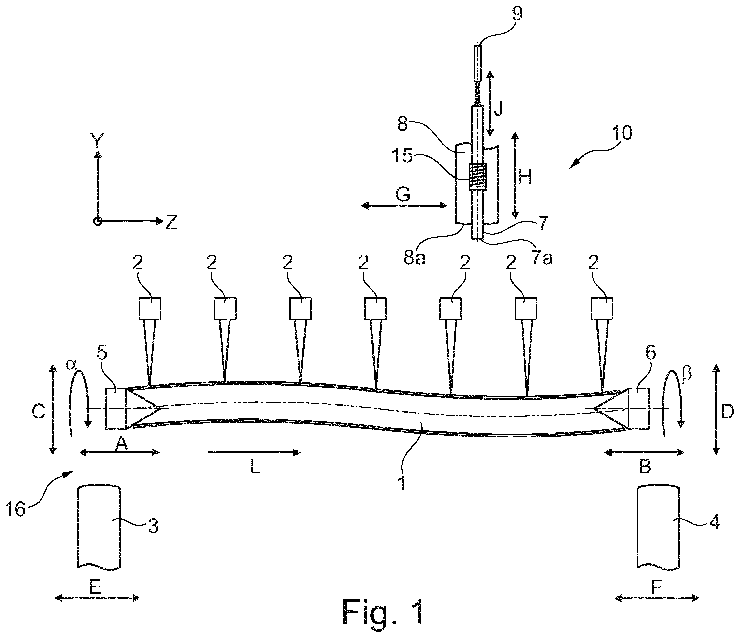

Eine in den Figuren 1 bis 5 schematisch dargestellte Richtmaschine 10 sowie das auf der Richtmaschine 10 durchgeführte erfindungsgemäße Verfahren dienen zum Richten von nicht geradem, stangenförmigem Material. Unter stangenförmigem Material sind hier insbesondere sich entlang einer Längsrichtung L erstreckende Rohre, Profile, Vollprofile etc. zu verstehen, die im Querschnitt vorzugsweise kreisförmig, aber auch eckig, insbesondere quadratisch ausgebildet sein können.

Das Ausführungsbeispiel bezieht sich auf ein Rohr 1, ohne jedoch in irgendeiner Form darauf eingeschränkt zu sein. Das Rohr 1 kann eine Länge von mehreren Metern aufweisen und Durchmesser von mehreren Zentimetern oder Dezimetern. Auch andere Maße sind denkbar.

Bei grober Betrachtung erscheint das Rohr 1 in Längsrichtung L entlang seiner Ist-Außenfläche 11 gerade. Bei genauerer Betrachtung, und darum geht es bei dieser Erfindung, ist das Rohr 1 nicht gerade.

Das in Figur 1 dargestellte Rohr 1 ist beispielsweise in einer Y-Richtung wellenförmig ausgebildet. Die Wellenform ist hier nicht maßstäblich, sondern weit übertrieben dargestellt. Üblicherweise bewegen sich Amplituden der im Rohr ausgebildeten Wellen im mm-Bereich oder darunter bei Rohrlängen von ein bis zwei Metern. Die Welle erstreckt sich entlang der Längsrichtung L, die hier der Z-Richtung entspricht. Auch in einer (nicht eingezeichneten) X-Richtung können wellenförmige Ausbuchtungen auftreten, die mit der Wellenform in Y-Richtung überlagert sind. Die Ausbuchtungen müssen nicht wellenförmig sein.

Das Rohr 1 weist die Ist-Außenfläche 11 auf, die von der sich in Längsrichtung L erstreckenden geraden Soll-Außenfläche abweicht. Entlang der Längsrichtung L kann durch Differenzbildung der Ist-Außenfläche von der Soll-Außenfläche ein Abweichungsprofil ermittelt werden. Die Richtmaschine 10 weist dazu eine Aufnahme 16 auf, an deren Stirnseiten Werkzeugspitzen 5, 6 zur Rohreinspannung und Rohrrotation angeordnet sind. Die Aufnahme 16 kann eine vorzugsweise konische Auflagefläche zur Auflage des Rohres 1 aufweisen. Hier ist die Aufnahme 16 als lichter Abstand zwischen den beiden Werkzeugspitzen 5, 6 zu verstehen. Die Werkzeugspitzen 5, 6 sind individuell entlang Verfahrachsen A bzw. B, die beide in Z-Richtung angeordnet sind, hin und her verfahrbar. Die Werkzeugspitzen 5, 6 sind auch jeweils in der X-Y-Ebene in Fig. 1 jede für sich verfahrbar. In Fig.1 ist eine Verfahrachse C für den eine Werkzeugspitze 5 und eine Verfahrachse D für die andere Werkzeugspitze 6, beide jeweils in Y-Richtung verlaufend, eingezeichnet. Die beiden Verfahrachsen in X- Richtung der beiden Werkzeugspitzen 5, 6 sind nicht eingezeichnet. Die beiden Werkzeugspitzen 5, 6 sind einander exakt gegenüberliegend angeordnet, so dass ihre Drehachsen in Verlängerung zueinander verlaufen. Zwischen ihnen kann das Rohr 1 eingespannt werden, indem die Werkzeugspitzen 5, 6 aufeinander zu verfahren werden. Das eingespannte Rohr 1 ist durch Rotation der Werkzeugspitzen 5, 6 selbst rotierbar.

Entlang der sich zwischen den Werkzeugspitzen 5, 6 befindlichen Aufnahme 16 sind Messtaster 2 für die Vermessung der Geradheit des Rohres 1 entlang der Längsrichtung L voneinander beabstandet angeordnet. Der Abstände voneinander können äquidistant sein. Es können auch unterschiedliche Abstände gewählt werden. Die Messtaster 2 können auch im Querschnitt senkrecht zur Längsrichtung L um die Aufnahme 16 und das Rohr 1 herum in unterschiedlichen Winkeln angeordnet sein. Die Messtaster 2 können taktil oder optisch oder anders ausgebildet sein. Sie ermöglichen Entfernungsmessungen im Bereich mit einer Genauigkeit von 0,1 µm oder weniger. Die Messtaster 2 zur Vermessung der Geradheit des Rohres 1 sind datenleitend mit einer Steuerung mit einem Datenspeicher verbunden, in dem insbesondere Abstandsmesswerte der einzelnen Messtaster 2 zu Messpunkten auf der Außenfläche 11 des Rohres 2 abgelegt sind. Eine Vermessung der Geradheit des Rohres 1 erfolgt dabei in der Weise, dass das Rohr 1 gemäß Fig. 1 eingespannt wird, die Messtaster 2 jeweils eine erste Abstandsmessung durchführen, das Rohr 1 ein Stück weit um einen Winkel α, β rotiert wird, die Messtaster 2 in der rotierten Winkelstellung eine zweite Abstandsmessung vornehmen, das Rohr 1 um einen weiteren Winkel α, β rotiert wird und die Messtaster 2 eine dritte Abstandsmessung vornehmen und so weiter. Die Abstandsmesswerte werden zusammen mit der Position des Messtasters 2 entlang der Längsrichtung L und der Winkelposition abgespeichert und ausgewertet, und die Ist-Außenfläche 11 des Rohres 1 wird ermittelt. Die Ist-Außenfläche 11 des Rohres 1 weicht von der geraden Soll-Außenfläche des Rohres 1 ab. In Fig. 1 ist das Rohr 1 übertrieben gekrümmt dargestellt.

Üblicherweise werden zur Weiterverarbeitung der Rohre 1 Abweichungen von der Geradheit mit einer vorgegebenen Toleranz von 1 µm oder weniger geduldet. Außerhalb des Toleranzbereichs befindliche Nicht-Geradheiten werden aussortiert und erfindungsgemäß gerichtet. Das Rohr 1 wird durch die erfindungsgemäße Richtmaschine 10 gerichtet um wieder innerhalb des Toleranzbereiches zu gelangen.

Das Richten des Rohres 1 geschieht bevorzugt mit Hilfe von zwei Ambossen 3, 4, die in Fig. 1 schematisch dargestellt sind und mittels eines erfindungsgemäßen Richthammers 8, in dem zentral ein integrierter Messtaster 7 angeordnet ist. Der Richthammer 8 ist ein zylindrisches Gebilde mit einer zentralen Bohrung, vorzugsweise zentralen kreisförmigen Bohrung, in der vorzugsweise der taktile oder optische integrierte Messtaster 7 eingelassen ist. Der integrierte Messtaster 7 ist entlang einer vertikalen Verfahrachse J innerhalb des Richthammers 8 relativ zu dem Richthammer 8 hin und her verfahrbar und kann mit einer Messfläche 7a fluchtend mit einer Schlagfläche 8a des Richthammers 8 im Richthammer 8 verschwinden.

Der integrierte Messtaster 7 ist mit einer Rückstellfeder 15 im Richthammer 8 montiert, die die Messfläche 7a im belastungsfreien Zustand aus der Schlagfläche 8a herausdrückt.

Der Richthammer 8 ist gemäß Fig. 1 entlang einer vertikalen Verfahrachse H zum Rohr hin und vom Rohr 1 weg verfahrbar, er ist entlang einer horizontalen Verfahrachse G entlang der Längsrichtung L des Rohres 1 verfahrbar und auch entlang einer (nicht eingezeichneten) horizontalen Verfahrachse senkrecht zur Längsrichtung L verfahrbar. Die Messfläche 7a des Messtasters 7 ist, wie in Fig. 1 gezeigt, relativ zur Verfahrachse H des Richthammers 8 ebenfalls parallel, vorzugsweise sehr leicht, d. h. also fast widerstandsfrei verfahrbar.

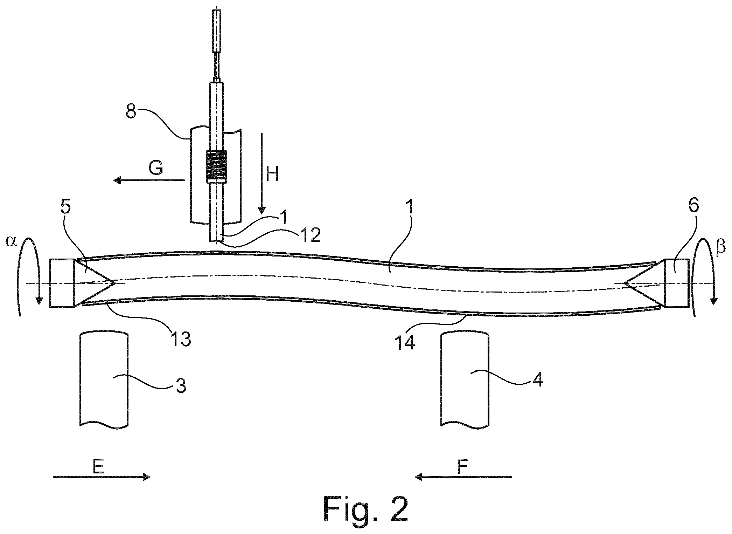

Fig. 2 zeigt die Anordnung des Richthammers 8, des Messtasters 7 sowie der zwei Ambosse 3,4 und des zwischen den Werkzeugspitzen 5, 6 eingespannten Rohres 1 unmittelbar vor dem Richten. Die beiden Ambosse 3, 4 sind entlang der Längsrichtung L entlang Verfahrachsen E, F hin und her verfahrbar.

Aus dem Abweichungsprofil der Ist- von der Soll-Außenfläche des Rohres 1 werden mittels bekannter Kl-Algorithmen oder Machine-Learning-Algorithmen, beispielsweise bekannt aus Deep Learning mit Python und Keras (ISBN 978-3-95845-838-3) eine Umformposition 12 des Richthammers 8 auf dem Rohr 1 und Auflagestellen 13, 14 des Rohres 1 auf den Ambossen 3, 4 berechnet und damit Positionen der Verfahrachse G und Winkeln α, β der beiden Winkelspitzen 5, 6 und die erforderlichen Soll-Verformungen des Rohres 1 an der Umformposition 12 berechnet, um das Rohr zu richten, wenn das Rohr 1 zwischen den beiden in bestimmtem Abstand voneinander beabstandeten Ambossen 3, 4 aufgelagert ist.

Das Problem ist, dass die Soll-Verformung an der Umformposition 12 des Rohres 1 und ein Umformhub h des Richthammers 8 einander nicht eindeutig zugeordnet werden können.

Der Richtvorgang im Stand der Technik ist grundsätzlich immer der gleiche Vorgang. Um das Rohr 1 plastisch zu verformen, ist es zunächst notwendig, mit dem Richthammer 8 den Umformhub h auf das Rohr 1 auszuüben und den elastischen Bereich der Verformung zu überschreiten. Erst nach der elastischen Verformung findet eine plastische Verformung s statt. Der Umformhub h des Richthammers 8 muss grundsätzlich der elastischen Verformung zuzüglich der plastischen Verformung s entsprechen. Wenn der Richthammer 8 wieder zurückverfahren wird und das Rohr 1 entlastet, federt der elastische Verformungsanteil im Wesentlichen zurück, und es verbleibt nur der plastische Verformungsanteil, der hier auch der plastischen Ist-Verformung s_ist entspricht.

Es ist zwar grundsätzlich bekannt, wie groß die plastische Verformung s an der Umformposition 12 sein soll, um eine hinreichende Geradheit des Rohres 1 durch das Richten zu erzielen. Es ist aber keine Funktion zwischen elastischem Verformungsanteil und plastischem Verformungsanteil des Umformhubs h bekannt. Die Funktion zwischen elastischem Verformungsanteil und plastischem Verformungsanteil hängt von vielen Bedingungen ab, insbesondere von den Eigenschaften des Werkstoffs, den Kaltverfestigungen oder sonstigen Materialschwankungen. Sie sind jedoch so unterschiedlich, dass selbst innerhalb einer Länge eines Rohres 1 die Funktion zwischen elastischem Anteil und plastischem Anteil nicht vorhersagbar ist. Es ist somit nicht sicher bekannt, welcher Umformhub h durch den Richthammer 8 durchgeführt werden muss, um eine gewünschte Soll-Verformung s_soll zu erzielen. Zwar kann mit statistischen Verfahren der mögliche Umformhub h vorhergesagt werden, es liegt dann aber auch eine erhebliche Wahrscheinlichkeit vor, dass das Rohr 1 zu viel oder zu wenig plastisch verformt wird. Wenn eine Überformung stattfindet, müsste das Rohr 1 erneut vermessen, von den Ambossen 3, 4 abgehoben, gedreht und erneut abgelegt werden und erneut gerichtet werden. Dies ist zeitintensiv.

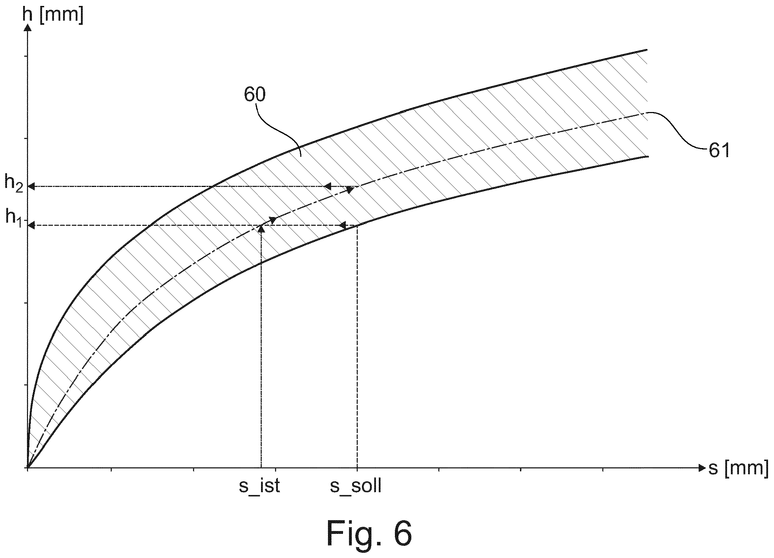

In Fig. 6 ist schematisch die Idee des Verfahrens erkennbar, das in den Figuren 2, 3, 4, 5 durchgeführt wird. Fig. 6 zeigt zunächst ein vorgegebenes Kennfeld 60, das durch statistische Verfahren in Verbindung mit künstlicher Intelligenz, Machine-Learning usw. beispielsweise gemäß Deep Learning mit Python und Keras (ISBN 978-3-95845-838-3) gewonnen werden kann. Dort ist der statistische Zusammenhang zwischen dem Umformhub h des Richthammers 8 und der durch den Umformhub h erzeugten plastischen Verformung s für ein bestimmtes Material dargestellt. Es gehen auch die Abstände der beiden Ambosse 3, 4 und die Position des Richthammers 8 in das Kennfeld 60 ein. Das Kennfeld 60 ist so zu lesen, dass sich bei Durchführung eines ersten Umformhubs h_1 eine plastische Ist-Verformung s_ist innerhalb einer Verformungsspanne b entlang der X-Achse innerhalb des Kennfeldes 60 befindet. Die plastische Ist-Verformung s_ist befindet sich mit einer Wahrscheinlichkeit von 95 %, 99 %, 99,9 % innerhalb der Verformungsspanne b. Die Breite des Kennfeldes 60, also die Länge der Verformungsspanne b in X-Richtung, hängt primär von den Materialeigenschaften ab. Die Breite hängt insbesondere von Eigenspannungen im Werkstoff, Kaltverfestigungen oder sonstigen Materialschwankungen ab. Dagegen hängt zwar die globale Form des Kennfeldes 60 auch davon ab, wie weit die Ambosse 3, 4 voneinander entfernt sind, welchen Durchmesser das Rohr 1 hat, welche Wandungsstärke das Rohr 1 hat usw., das sind jedoch alles Parameter, die ein exaktes Biegeverhalten vorhersagen lassen und die nicht die Breite des Kennfeldes 60 an sich maßgeblich beeinflussen. Sie beeinflussen lediglich die globale Form, also die Steigung des Kennfeldes 60 usw.

Des Weiteren ist bekannt, dass die Ist-Verformung s_ist eines stangenförmigen Materials, insbesondere des Rohres 1, das an einer Umformposition 12 einem unterschiedlichen ersten Umformhub h ausgesetzt wird, einer Kennlinie 61 folgt, die sich innerhalb des in Fig. 6 dargestellten Kennfeldes 60 bewegt. Die Kennlinie 61 ist in das Kennfeld 60 eingefügt. Es hat sich herausgestellt, dass die Kennlinie 61 innerhalb des Kennfeldes 60 durch zwei Punkte auch real genau vorgebbar ist.

Das erfindungsgemäße Verfahren läuft wie nachfolgend beschrieben ab.

Das Rohr 1 wird in bekannter Weise gemäß Fig. 2 auf den Ambossen 3, 4 in einem bestimmten Winkel α, β positioniert. Die Umformposition 12 des Richthammers 8 und die Auflagestellen 13, 14 auf den Ambossen 3, 4 sind bekannt. Der Richthammer 8 wird in einem ersten Verfahrensschritt gemäß Fig. 2 mittels der Verfahrachse G über der Umformposition 12 angeordnet. Es ist bekannt, wie groß die plastische Soll-Verformung s_soll an der Umformposition 12 auszusehen hat, um ein möglichst gerades Rohr 1 nach dem Richtvorgang zur Verfügung stellen zu können.

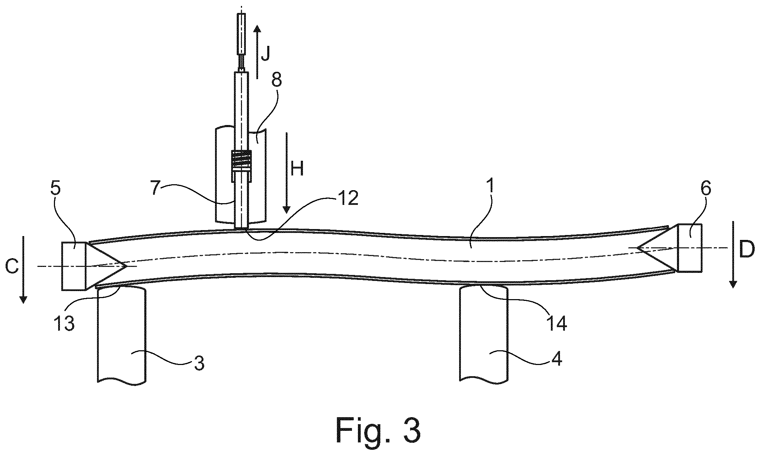

In einem zweiten Verfahrensschritt wird gemäß Fig. 3 der Richthammer 8 entlang der Verfahrachse H in Richtung der Umformposition 12 des Rohres 1 verfahren, so lange bis die Messfläche 7a des Messtasters 7 die Außenfläche des Rohres 1 berührt. Der Messtaster 7 übt aber keinen Druck auf die Umformposition 12 aus, durch den das Rohr bereits gebogen würde. Der Richthammer 8 befindet sich in der Null-Position. Die Null-Position wird bestimmt, und deren Koordinaten werden festgehalten. Es wird jetzt in der Null-Position eine erste Messung durch den Messtaster 7 durchgeführt und erste Messwerte des Messtasters 7 gespeichert. Es werden beispielsweise die Messdaten festgehalten, wie weit die Messfläche 7a des Messtasters von der Schlagfläche 8a in Y-Richtung entfernt ist oder ein ähnliches Maß. Die ersten Messwerte sind Messwerte, die den Abstand zwischen der Umformposition 12 und der Schlagfläche 8a des Richthammers 8 bestimmen. Das muss aber nicht so sein, es kommt lediglich darauf an, dass die Position der Umformposition 12 gegenüber dem Richthammer 8 festgehalten wird.

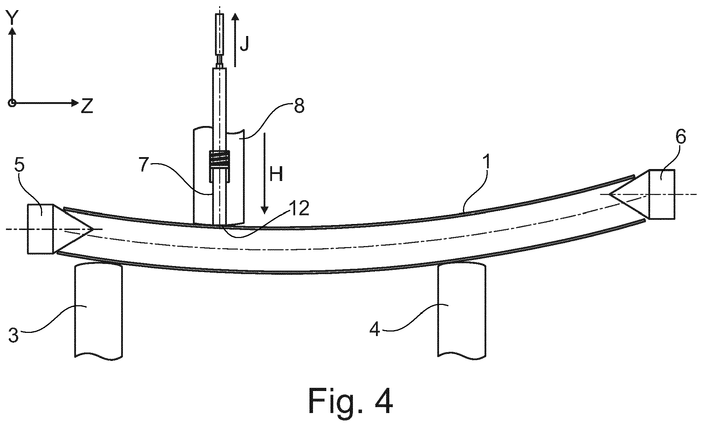

In einem dritten Verfahrensschritt wird gemäß Fig. 4 auf die Umformposition 12 der erste Umformhub h_1 ausgeübt.

Der erste Umformhub h_1 wird vorab aus der bekannten Soll-Verformung s_soll an der Umformposition 12 ermittelt. Dazu wird gemäß Fig. 6 der Schnittpunkt der Soll-Verformung s_soll mit der unteren, minimalen Grenze des Kennfeldes 60 bestimmt. Der Schnittpunkt gibt den ersten Umformhub h_1 vor. Der gewählte erste Umformhub h_1 erzeugt für das Material statistisch eine Soll-Verformung s_soll in der Verformungsspanne b. Durch den ersten Umformhub h_1 wird nur im günstigsten Fall die Soll-Verformung s_soll bereits erreicht. Wenn das nicht der Fall ist, wird jedenfalls eine Ist-Verformung s_ist hergestellt, die sich unterhalb der Soll-Verformung s_soll innerhalb der Verformungsspanne b befindet. Das Rohr 1 wird also weniger verformt, als es eigentlich verformt werden müsste.

Der Vorgang der Verformung erfolgt gemäß Fig. 4 durch den Richthammer 8, der fest an einer NC-steuerbaren Achse H montiert ist. Der Richthammer 8 wird mittels der NC-steuerbaren Achse H gemäß Fig. 4 um den ersten Umformhub h_1 entgegen der Y-Richtung verfahren und biegt das Rohr 1 gemäß Fig. 4 ein Stück weit durch. Die Biegung enthält einen elastischen und einen plastischen Anteil.

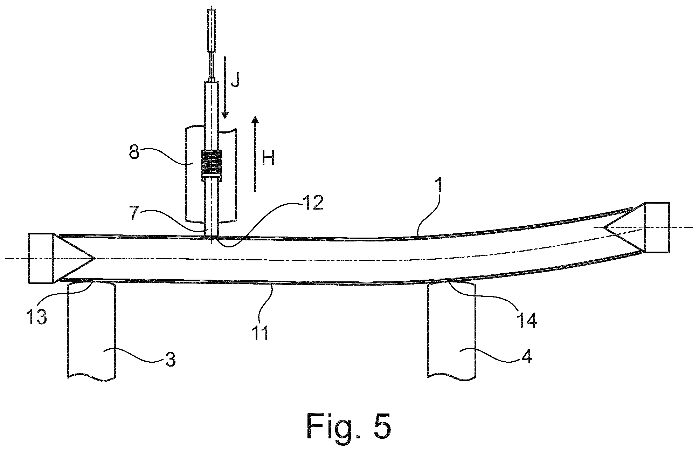

In Fig. 5 ist der Richthammer 8 wieder zurückverfahren, und die elastische Verformung hat sich zurückgebildet. Die plastische Verformung s ist geblieben und begradigt das Rohr 1.

Der erfindungsgemäße Informationsgewinn erfolgt durch den Messtaster 7. Danach wird der Richthammer 8 in einem vierten Verfahrensschritt gemäß Fig. 5 zurückverfahren, das Rohr 1 entlastet, der Richthammer 8 wird in die Null-Position gemäß Fig. 3 zurückverfahren, und es wird eine zweite Messung mittels des Messtasters 7 durchgeführt, und es werden zweite Messwerte ermittelt. Die zweiten Messwerte werden mit den ersten Messwerten des Messtasters 7 verglichen, und aus der Differenz der Messwerte, beispielweise der Differenz der Abstände der Umformposition 12 von der Schlagfläche 8a des Richthammers 8, wird die Ist-Verformung s_ist nach dem ersten Umformhub h_1 bestimmt.

Die erfinderische Idee liegt darin, aus den Informationen über die erste Ist-Verformung s_ist das Kennfeld 60 deutlich einzuengen, um einen zweiten Umformhub h_2 deutlich präziser ausführen zu können und sehr dicht an die Soll-Verformung s_soll zu gelangen.

Die plastische Ist-Verformung s_ist nach dem ersten Umformhub h_1 entspricht in der Regel nicht der plastischen Soll-Verformung s_soll, sondern sie ist geringer als die Soll-Verformung s_soll. Die Messungen des Messtasters 7 erlauben es aber, einen konkreten Wert für die Ist-Verformung s_ist anzugeben, die durch den ersten Umformhub H_1 erzeugt wurde, so dass gemäß Fig. 6 dem ersten Umformhub h_1 eine tatsächlich stattgefundene Ist-Verformung s_ist zugeordnet werden kann, und damit kann der Umformposition 12 mit ihren spezifischen Materialeigenschaften die Kennlinie 61 innerhalb des Kennfeldes 60 in Fig. 6 zugeordnet werden. Die Kennlinie 61 gibt das plastische Verformungsverhalten bei verschiedenen Hüben h für die Umformposition 12 wieder.

In einer weiteren Verfahrensschleife, gemäß den Figuren 3, 4, 5 wird das Rohr 1 an der Umformposition 12 mittels des zweiten Umformhubs h_2 gerichtet. Die Größe des zweiten Umformhubs h-2 ermittelt sich aus der Kennlinie 61 in Fig. 6 und deren Schnittpunkt mit der Soll-Verformung s_soll.

Gegebenenfalls kann die Verfahrensschleife auch noch ein drittes oder viertes Mal durchgeführt werden. In der realen Durchführung des Verfahrens hat sich gezeigt, dass mehrere Verfahrensschleifen notwendig sind. Des Weiteren hat sich aber auch gezeigt, dass vorgegebene Geradheitstoleranzen durch dieses Verfahren, das sich iterativ der Soll-Verformung s_soll nähert, mit großer Sicherheit eingehalten werden können.

### Bezugszeichenliste

- 1: Rohr/stangenförmiges Material
- 2: Messtaster
- 3: Amboss
- 4: Amboss
- 5: Werkzeugspitze
- 6: Werkzeugspitze

- 7 7a: Messfläche
- 8: Richthammer
- 8a: Schlagfläche
- 10: Richtmaschine
- 11: Ist-Außenfläche
- 12: Umformposition
- 13: Auflagestelle
- 14: Auflagestelle
- 15: Rückstellfeder

- 16: Aufnahme

- 60: Kennfeld
- 61: Kennlinie

- b: Verformungsspanne

- h: Umformhub
- h_1: erster Umformhub
- h_2: zweiter Umformhub
- s: plastische Verformung
- s_ist: plastische Ist-Verformung
- s_soll: Soll-Verformung

- A: Verfahrachse
- B: Verfahrachse
- C: Verfahrachse
- D: Verfahrachse
- E: Verfahrachse
- F: Verfahrachse
- G: vertikale Verfahrachse
- H: horizontale Verfahrachse

- J: Verfahrachse

- L: Längsrichtung

- α: Winkel
- β: Winkel

## Patentansprüche

1. Verfahren zum Richten von nicht geradem, stangenförmigem Material (1), indem eine plastische Soll-Verformung (s_soll) an einer Umformposition (12) des stangenförmigen Materials (1) ermittelt wird,
ein Richthammer (8) mit integriertem Messtaster (7) auf die Umformposition (12) verfahren wird,
ein Kennfeld (60) zur Verfügung gestellt wird, das für das Material für jeden Umformhub (h) eine plastische Verformungsspanne (b) angibt,
ein erster Umformhub (h_1) des Richthammers (8) ausgeführt wird,
eine durch den ersten Umformhub (h_1) erfolgte plastische Ist-Verformung (s_ist) mittels des integrierten Messtasters (7) ermittelt wird,
aus der Ist-Verformung (s_ist) nach dem ersten Umformhub (h_1) die Kennlinie (61) des stangenförmigen Materials (1) innerhalb des Kennfeldes (60) ermittelt wird und aus der Kennlinie (61) der zweite Umformhub (h_2) ermittelt wird, indem der zweite Umformhub (h_2) einem Umformhub (h) zur plastischen Soll-Verformung (s_soll) entlang der Kennlinie (61) entspricht.

2. Verfahren nach Anspruch 1,
**dadurch gekennzeichnet, dass** die Soll-Verformung (s_soll) innerhalb der oberen 10 % der Verformungsspanne (b) vorzugsweise als Maximalwert der Verformungsspanne (b) des ersten Umformhubs (h_1) gewählt wird.

3. Verfahren nach Anspruch 1 oder 2,
**dadurch gekennzeichnet, dass** durch den ersten Umformhub (h_1) eine elastische Verformung des Materials und die plastische Ist-Verformung (s_ist) innerhalb der Verformungsspanne (b) ausgeführt wird.

4. Verfahren nach einem der vorstehenden Ansprüche,
**dadurch gekennzeichnet, dass** der erste Umformhub (h_1) so gewählt wird, dass die ihm zugeordnete Verformungsspanne (b) einen maximalen Wert hat, der der Soll-Verformung (s_soll) entspricht, und die durch den ersten Umformhub (h_1) erzeugte Ist-Verformung (s_ist) eine Kennlinie (61) innerhalb des Kennfelds (60) festlegt und die Kennlinie (61) zur Bestimmung des zweiten Umformhubs (h_2) ausgewählt wird.

5. Verfahren nach einem der vorstehenden Ansprüche,
**dadurch gekennzeichnet, dass** die Soll-Verformung (s_soll) an der Umformposition (12) des stangenförmigen Materials (1) ermittelt wird,
das stangenförmige Material (1) eingespannt wird,
eine Null-Position des Richthammers (8) bestimmt wird,
ein erster Messwert des integrierten Messtasters (7) in der Null-Position des Richthammers (8) bestimmt wird,
der erste Umformhub (h_1) des Richthammers (8) ausgeführt wird,
der Richthammer (8) in die Null-Position zurückverfahren wird,
ein zweiter Messwert des Messtasters (7) in der Null-Position des Richthammers (8) ermittelt wird und aus dem ersten und zweiten Messwert die plastische Ist-Verformung (s_ist) des stangenförmigen Materials (1) durch den ersten Umformhub (h_1) ermittelt wird,
die plastische Ist-Verformung (s_ist) mit der plastischen Soll-Verformung (s_soll) verglichen wird.

6. Verfahren nach einem der vorstehenden Ansprüche,
**dadurch gekennzeichnet, dass** ein Toleranzbereich vorgegeben wird und wenn nach Durchführung des ersten Umformhubes (h_1) eine Differenz zwischen Ist-Verformung (s_ist) und Soll-Verformung (s_soll) außerhalb des Toleranzbereiches liegt, der zweite Umformhub (h_2) an der Umformposition (12) durchgeführt wird.

7. Verfahren nach einem der vorstehenden Ansprüche,
**dadurch gekennzeichnet, dass** eine Ist-Außenfläche des stangenförmigen Materials (1) vermessen wird und ein Abweichungsprofil der Ist-Außenfläche von einer geradlinigen Soll-Außenfläche ermittelt wird,
aus dem Abweichungsprofil die Umformposition (12) ermittelt wird.

8. Verfahren nach Anspruch 7,
**dadurch gekennzeichnet, dass** die Umformposition (12) aus dem Abweichungsprofil als Winkel (α, β) um eine Längsrichtung (L) des stangenförmigen Materials (1) und als Position entlang einer Verfahrachse (G) des Richthammers (8) entlang der Längsrichtung (L) ermittelt wird.

9. Richtmaschine für nicht gerades, stangenförmiges Material (1) zur Durchführung einer plastischen Soll-Verformung (s_soll) an einer Umformposition (12) des stangenförmigen Materials (1) mit
einer Steuerung für eine Verfahreinrichtung mit einem Richthammer (8) mit integriertem Messtaster (7),
mit einem Speicher für ein Kennfeld (60), das für das Material für jeden Umformhub (h) eine plastische Ist-Verformungsspanne (b) angibt,
wobei durch die Steuerung einen ersten Umformhub (h_1) aus der Soll-Verformung (s_soll) bestimmbar ist,
eine durch den ersten Umformhub (h_1) erfolgte plastische Ist-Verformung (s_ist) durch den integrierten Messtaster (7) messbar ist und deren Messwerte über eine datenleitende Verbindung der Steuerung zuführbar ist,
aus der Ist-Verformung (s_ist) in der Steuerung eine Kennlinie (61) innerhalb des Kennfeldes (60) bestimmbar ist und
durch die Steuerung aus der Soll-Verformung (s_soll) und der Kennlinie (61) ein zweiter Umformhub (h_2) ermittelbar ist.

10. Richtmaschine nach Anspruch 9,
**gekennzeichnet durch** wenigstens zwei voneinander in einer Längsrichtung (L) beabstandete Ambosse (3, 4) zum Abstützen des stangenförmigen Materials (1).

11. Richtmaschine nach Anspruch 9 oder 10,
**dadurch gekennzeichnet, dass** zentral durch den Richthammer (8) der integrierte Messtaster (7) mit einem Messkopf (7a) geführt ist und der Messkopf (7a) über eine Schlagfläche (8a) des Richthammers (8) hinaus eine Abstandsmessung ermöglicht.

12. Richtmaschine nach Anspruch 9, 10 oder 11,
**dadurch gekennzeichnet, dass** der integrierte Messtaster (7) ein taktiler Messtaster ist, dessen Messkopf (7a) zentral aus einer Bohrung des Schlaghammers (8) hervorsteht und vollständig innenseitig hinter die Schlagfläche (8a) des Schlaghammers (8) zurückführbar ist.

13. Richtmaschine nach Anspruch 12,
**dadurch gekennzeichnet, dass** ein Messsystem zur Vermessung einer Außenfläche des stangenförmigen Materials (1) entlang einer Aufnahme (16) für das stangenförmige Material (1) angeordnet ist und das Messsystem sich gegenüberliegend angeordnete, drehbare Halterungen (5, 6) zum Einspannen des stangenförmigen Materials (1) aufweist sowie zwischen den Halterungen (5, 6) angeordnete Messtaster (2) aufweist, die neben dem eingespannten stangenförmigen Material (1) angeordnet sind.

## Claims

1. Method for straightening non-straight bar-shaped material (1), in that
a plastic target deformation (s_soll) is determined at a forming position (12) of the bar-shaped material (1),
a straightening hammer (8) with integrated measuring probe (7) is moved to the forming position (12),
a characteristic diagram (60) is provided which indicates a plastic deformation span (b) for the material for each forming stroke (h),
a first forming stroke (h_1) of the straightening hammer (8) is carried out,
an plastic actual deformation (s_ist) caused by the first forming stroke (h_1) is determined by means of the integrated measuring probe (7),
the characteristic curve (61) of the bar-shaped material (1) within the characteristic diagram (60) is determined from the actual deformation (s_ist) after the first forming stroke (h_1) and the second forming stroke (h_2) is determined from the characteristic curve (61) in that the second forming stroke (h_2) corresponds to a forming stroke (h) to the plastic target deformation (s_soll) along the characteristic curve (61).

2. Method according to claim 1,
**characterised in that** the target deformation (s_soll) within the upper 10% of the deformation span (b) is preferably selected as the maximum value of the deformation span (b) of the first forming stroke (h_1).

3. Method according to claims 1 or 2,
**characterised in that** an elastic deformation of the material and the plastic actual deformation (s_ist) within the deformation span (b) is carried out by the first forming stroke (h_1).

4. Method according to any of the preceding claims,
**characterised in that** the first deformation stroke (h_1) is selected such that the deformation span (b) associated therewith has a maximum value corresponding to the target deformation (s_soll), and the actual deformation (s_ist) generated by the first forming stroke (h_1) defines a characteristic curve (61) within the characteristic diagram (60), and the characteristic curve (61) is selected for determining the second forming stroke (h_2).

5. Method according to any of the preceding claims,
**characterised in that** the target deformation (s_soll) is determined at the forming position (12) of the bar-shaped material (1),
the bar-shaped material (1) is clamped,
a zero position of the straightening hammer (8) is determined,
a first measured value of the integrated measuring probe (7) is determined in the zero position of the straightening hammer (8),
the first forming stroke (h_1) of the straightening hammer (8) is executed,
the straightening hammer (8) is moved back to the zero position,
a second measured value of the measuring probe (7) is determined in the zero position of the straightening hammer (8) and the plastic actual deformation (s_ist) of the bar-shaped material (1) by the first forming stroke (h_1) is determined from the first and second measured values, the plastic actual deformation (s_ist) is compared with the plastic target deformation (s_soll).

6. Method according to any of the preceding claims,
**characterised in that** a tolerance range is specified and if, after the first forming stroke (h_1) has been carried out, a difference between the actual deformation (s_ist) and the target deformation (s_soll) lies outside the tolerance range, the second forming stroke (h_2) is carried out at the forming position (12).

7. Method according to any of the preceding claims,
**characterised in that** an actual outer surface of the bar-shaped material (1) is measured and a deviation profile of the actual outer surface from a straight-line target outer surface is determined,
the forming position (12) is determined from the deviation profile.

8. Method according to claim 7,
**characterised in that** the forming position (12) is determined from the deviation profile as an angle (α, β) about a longitudinal direction (L) of the bar-shaped material (1) and as a position along a travel axis (G) of the straightening hammer (8) along the longitudinal direction (L).

9. Straightening machine for non-straight, bar-shaped material (1) for carrying out a plastic target deformation (s_soll) at a forming position (12) of the bar-shaped material (1) with a control for a traversing device with a straightening hammer (8) with integrated measuring probe (7),
with a memory for a characteristic diagram (60) which indicates an plastic actual deformation span (b) for the material for each forming stroke (h),
whereby through the control a first forming stroke (h_1) is definable from the target deformation (s_soll),
an plastic actual deformation (s_ist) caused by the first forming stroke (h_1) is measurable through the integrated measuring probe (7) and its measured values is feedable to the control via a data-conducting connection,
a characteristic curve (61) within the characteristic diagram (60) can be determined from the actual deformation (s_ist) in the control system and
a second forming stroke (h_2) can be determined by the control from the target deformation (s_soll) and the characteristic curve (61).

10. Straightening machine according to claim 9,
**characterised by** at least two anvils (3, 4) spaced from each other in a longitudinal direction (L) for supporting the bar-shaped material (1).

11. Straightening machine according to claim 9 or 10,
**characterised in that** the integrated measuring probe (7) with a measuring head (7a) is guided centrally through the straightening hammer (8) and the measuring head (7a) enables a distance measurement beyond an impact surface (8a) of the straightening hammer (8).

12. Straightening machine according to claim 9, 10 or 11,
**characterised in that** the integrated measuring probe (7) is a tactile measuring probe, the measuring head (7a) of which projects centrally from a bore of the straightening hammer (8) and can be returned completely on the inside behind the striking surface (8a) of the straightening hammer (8).

13. A straightening machine according to claim 12,
**characterised in that** a measuring system for measuring an outer surface of the bar-shaped material (1) is arranged along a receptacle (16) for the bar-shaped material (1) and that the measuring system comprises oppositely arranged, rotatable holders (5, 6) for clamping the bar-shaped material (1) and measuring probes (2) arranged between the holders (5, 6), which are arranged next to the clamped bar-shaped material (1).

## Revendications

1. Procédé de redressage d'un matériau (1) en forme de tige non rectiligne, par le fait que
une déformation plastique de consigne (s_soll) est déterminée à une position de mise en forme (12) du matériau en forme de tige (1),
un marteau de redressage (8) avec palpeur de mesure intégré (7) est déplacé sur la position de mise en forme (12),
un diagramme caractéristique (60) est mis à disposition, lequel indique pour le matériau une marge de déformation plastique (b) pour chaque course de mise en forme (h),
une première course de mise en forme (h_1) du marteau de redressage (8) est exécutée,
une déformation plastique réelle (s_ist) effectuée par la première course de mise en forme (h_1) est déterminée au moyen du palpeur de mesure intégré (7),
à partir de la déformation réelle (s_ist) après la première course de mise en forme (h_1), la courbe caractéristique (61) du matériau en forme de tige (1) est déterminée à l'intérieur du diagramme caractéristique (60) et à partir de la courbe caractéristique (61), la deuxième course de mise en forme (h_2) est déterminée par le fait que la deuxième course de mise en forme (h_2) correspond à une course de mise en forme (h) vers la déformation plastique de consigne (s_soll) le long de la courbe caractéristique (61).

2. Procédé selon la revendication 1,
**caractérisé en ce que** la déformation de consigne (s_soll) à l'intérieur des 10 % supérieurs de la marge de déformation (b) est de préférence choisie comme valeur maximale de la marge de déformation (b) de la première course de mise en forme (h_1).

3. Procédé selon la revendication 1 ou 2,
**caractérisé en ce que**, par la première course de mise en forme (h_1), une déformation élastique du matériau et la déformation plastique réelle (s_ist) sont exécutées à l'intérieur de la marge de déformation (b).

4. Procédé selon l'une quelconque des revendications précédentes,
**caractérisé en ce que** la première course de mise en forme (h_1) est choisie de telle sorte que la marge de déformation (b) qui lui est associée a une valeur maximale qui correspond à la déformation de consigne (s_soll), et la déformation réelle (s_ist) produite par la première course de mise en forme (h_1) définit une courbe caractéristique (61) à l'intérieur du diagramme caractéristique (60), et la courbe caractéristique (61) est sélectionnée pour déterminer la deuxième course de mise en forme (h_2).

5. Procédé selon l'une quelconque des revendications précédentes,
**caractérisé en ce que** la déformation de consigne (s_soll) est déterminée à la position de mise en forme (12) du matériau en forme de tige (1),
le matériau en forme de tige (1) est serré,
une position zéro du marteau de redressage (8) est déterminée,
une première valeur de mesure du palpeur de mesure intégré (7) est déterminée dans la position zéro du marteau de redressage (8),
la première course de mise en forme (h_1) du marteau de redressage (8) est exécutée,
le marteau de redressage (8) est ramené à la position zéro,
une deuxième valeur de mesure du palpeur de mesure (7) est déterminée dans la position zéro du marteau de redressage (8) et la déformation plastique réelle (s_ist) du matériau en forme de tige (1) par la première course de mise en forme (h_1) est déterminée à partir de la première et de la deuxième valeur de mesure,
la déformation plastique réelle (s_ist) est comparée à la déformation plastique de consigne (s_soll).

6. Procédé selon l'une quelconque des revendications précédentes,
**caractérisé en ce qu'**une plage de tolérance est prédéfinie et si, après l'exécution de la première course de mise en forme (h_1), une différence entre la déformation réelle (s_ist) et la déformation de consigne (s_soll) se situe en dehors de la plage de tolérance, la deuxième course de mise (h_2) est exécutée à la position de mise en forme (12).

7. Procédé selon l'une quelconque des revendications précédentes,
**caractérisé en ce qu'**une surface extérieure réelle du matériau en forme de tige (1) est mesurée et un profil d'écart de la surface extérieure réelle par rapport à une surface extérieure de consigne rectiligne est déterminé,
la position de mise en forme (12) est déterminée à partir du profil d'écart.

8. Procédé selon la revendication 7,
**caractérisé en ce que** la position de mise en forme (12) est déterminée à partir du profil d'écart en tant qu'angle (α, β) autour d'une direction longitudinale (L) du matériau en forme de tige (1) et en tant que position le long d'un axe de déplacement (G) du marteau de redressage (8) le long de la direction longitudinale (L).

9. Machine de redressage pour un matériau en forme de tige (1) non rectiligne, destinée à réaliser une déformation plastique de consigne (s_soll) à une position de mise en forme (12) du matériau en forme de tige (1), avec
une commande pour un appareil de déplacement avec un marteau de redressage (8) avec un palpeur de mesure intégré (7),
avec une mémoire pour un diagramme caractéristique (60) qui indique pour le matériau une marge de déformation plastique réelle (b) pour chaque course de mise en forme (h),
une première course de mise en forme (h_1) pouvant être déterminée par la commande à partir de la déformation de consigne (s_soll),
une déformation plastique réelle (s_ist) effectuée par la première course de mise en forme (h_1) pouvant être mesurée par le palpeur de mesure intégré (7) et dont les valeurs de mesure peuvent être transmises à la commande par une liaison de transmission de données,
une courbe caractéristique (61) pouvant être déterminée à l'intérieur du diagramme caractéristique (60) à partir de la déformation réelle (s_ist) dans la commande et
une deuxième course de mise en forme (h_2) pouvant être déterminée par la commande à partir de la déformation de consigne (s_soll) et de la courbe caractéristique (61).

10. Machine de redressage selon la revendication 9,
**caractérisée par** au moins deux enclumes (3, 4) espacées l'une de l'autre dans une direction longitudinale (L) pour supporter le matériau en forme de tige (1).

11. Machine de redressage selon la revendication 9 ou 10,
**caractérisée en ce que** le palpeur de mesure intégré (7) avec une tête de mesure (7a) est guidé au centre par le marteau de redressage (8) et la tête de mesure (7a) permet une mesure de distance au-delà d'une surface de frappe (8a) du marteau de redressage (8).

12. Machine de redressage selon la revendication 9, 10 ou 11,
**caractérisée en ce que** le palpeur de mesure intégré (7) est un palpeur de mesure tactile dont la tête de mesure (7a) fait saillie au centre d'un alésage du marteau à percussion (8) et peut être ramenée complètement à l'intérieur derrière la surface de frappe (8a) du marteau à percussion (8).

13. Machine de redressage selon la revendication 12,
**caractérisée en ce qu'**un système de mesure pour mesurer une surface extérieure du matériau en forme de tige (1) est agencé le long d'un logement (16) pour le matériau en forme de tige (1) et le système de mesure présente des supports rotatifs (5, 6) agencés en face l'un de l'autre pour serrer le matériau en forme de tige (1) et présente des palpeurs de mesure (2) agencés entre les supports (5, 6) qui sont agencés à côté du matériau en forme de tige serré (1).
